# EUROPEAN PATENT APPLICATION

(11) **EP 1 236 616 A1**
(43) Date of publication of application: **04.09.2002**
(21) Application number: 02250867.5
(22) Date of filing: 08.02.2002
(51) Int. Cl.: B60R 1/076

(54) **Rearview mirror assembly**

(30) Priority: 14.02.2001 US 782866
(71) Applicant: METAGAL INDUSTRIA E COMERCIO LTDA., Estado de Sao Paulo CEP:09990-090 (BR)
(72) Inventor: Miyabukuro, Pedro Takashi, Rua das Moncoes No. 326, Estado de Sao Paulo, Cep 09090-520 (BR)
(74) Representative: Johnstone, Douglas Ian

(57) **Abstract**

The mirror assembly includes a support structure (20) to which a mirror plate is connected via an adjusting device, a housing in which the support structure (20) is accommodated, a base connectable to a vehicle body and having a protuberance (72) and a stabilisation device (40) to which the support structure (20) is connected and which controls rotation of the support structure around a pivot post (60) which is fixed to the base. A first contoured surface (42) at one end of the sleeve (41) is urged against a second contoured surface (43) rotationally fixed relative to the pivot post (60) by means of a compression spring (44) arranged around the pivot post (60). A retaining element (45), against which the spring (44) may bear, is fixed to one end of the pivot post (60).

## Description

The present invention relates to a stabilisation device for external rearview mirrors and a rearview mirror incorporating such a device.

External rearview mirrors are well known and widely used. They usually include a mirror plate and a mechanical or electrical device for positioning the mirror plate formed as an actuator fixed to a rear face of the mirror plate. Transmission cables or an electrical cable extend from the actuator and levers or activation buttons in the interior of the vehicle are connected to the cables for control purposes. The mirror also usually includes a support structure to which the actuator is fixed and a housing with an opening facing a region behind the vehicle and accommodating the mirror plate. A pivoting means with a stabilisation device is incorporated in the structure and mounted around a supporting pivot post. A base with a protuberance thereon is fixed to a side of the vehicle, the post being fixed to the protuberance. The housing of the external rearview mirror protects the mirror against inevitable impacts and/or changes of position caused by external agents and/or passers-by. The device for stabilisation maintains the components referred to above, including the mirror plate, the activator, the support structure and the housing in a use position. The mirror moves forwardly or rearwardly in relation to the base under impact to preserve the integrity of the external rearview mirror.

In conventional constructions, the stabilisation device is formed as a bracket which is pressed radially around a vertical post. The construction however loosens due to vibrations of the vehicle and/or expansion and contraction of the materials under the action of temperature and/or fatigue of the materials and/or other factors. These cause changes in the position and/or vibration characteristics of the mirror assembly described. As a result of loosening, connections between its components must be retightened. The mirror must have means for accessing the stabilisation device for retightening purposes. The provision of access means has been a problem in conventional external rearview mirrors.

Accordingly, it is an object of the present invention to provide a device for stabilisation of the position of an external rearview mirror, which eliminates the disadvantages of the prior art.

It is also an object of the present invention to provide a similar construction for the stabilisation device which also ensures a simpler method of manufacture than has been possible for prior art mirrors.

Thus according to the invention there is provided a rearview mirror as set out in claim 1. Preferable features of the invention are set out in the dependent claims.

The construction and the method of operation of the invention together with additional objects and advantages thereof will be understood from the following description of a specific embodiment when read in conjunction with the accompanying Figures.

The invention will now be described by way of example only with reference to the accompanying Figures in which:

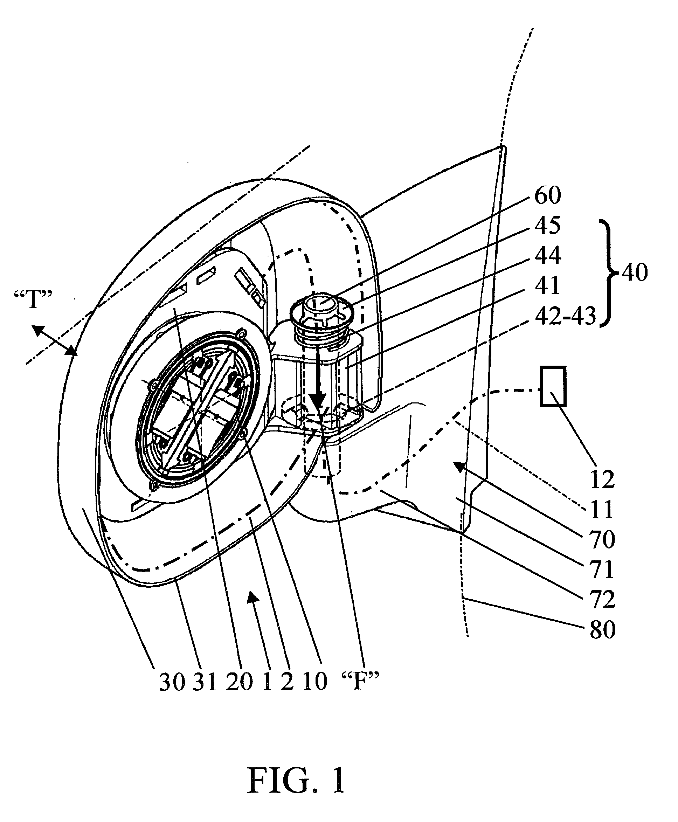

Figure 1 is a perspective view showing a mirror assembly with a stabilisation device in accordance with the present invention with the mirror plate removed;

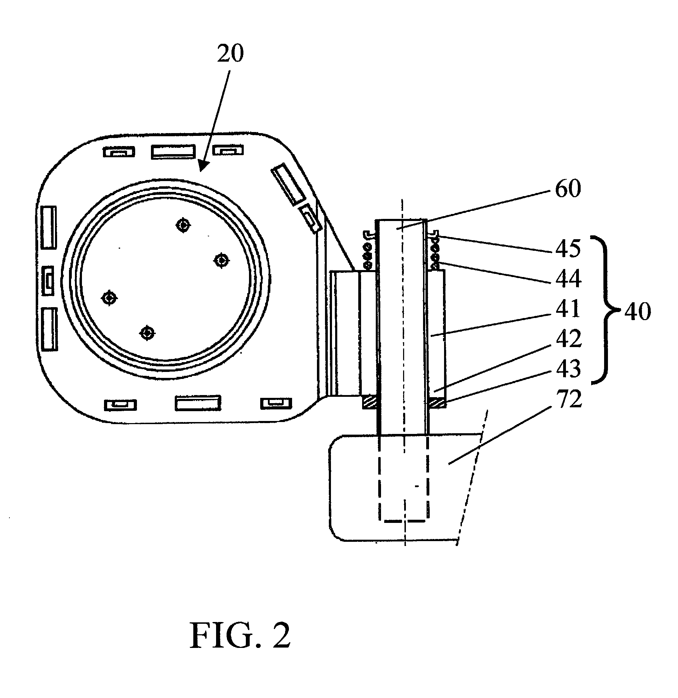

Figure 2 shows a support structure which is part of the mirror assembly and which incorporates a device in accordance with the present invention in partial cross-section; and

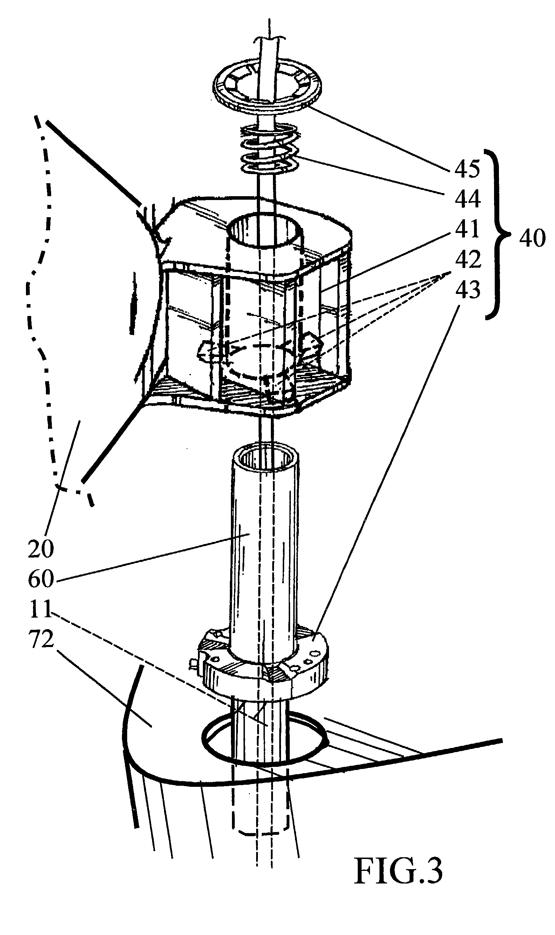

Figure 3 is an exploded perspective view showing a device in accordance with one embodiment of the invention.

A stabilisation device in accordance with the present invention is used for an external rearview mirror of an automotive vehicle. The external rearview mirror includes a mirror assembly 1 and a base 70 to which the mirror assembly 1 is articulated and which is fixed to a body 80 of the vehicle.

The mirror assembly includes a mirror plate 2, a mechanical or electrical device for positioning the mirror plate which includes an actuator 10 fixed to a posterior face of the mirror plate 10, transmission cables or an electrical cable 11 extending from the actuator 10 and levers or an actuation button 12 located inside the vehicle and connected to the cable 11. The mirror assembly also has a support structure 20 to which the actuator 10 of the mirror plate 2 is fixed. A housing 30 with an opening 31 directed towards a rear region of the vehicle and accommodating the mirror plate 2, the mirror plate actuator 10 and the support structure 20. The support structure 20 is fixed in the housing 30. A device 40 for positional stabilisation of the mirror is incorporated in the support structure and mounted in an articulated way about a vertical pivot post 60 of the base 70. The base 70 includes the pivot post 60, a plate structure 71 fixed to the side of the vehicle and a protuberance 72 in which a lower end of the post 60 is mounted.

The device 40 for stabilisation of the mirror position provides stabilisation of the mirror assembly through an axial restoring force F applied to the pivot post 60. The device 40 includes a sleeve 41 incorporated in an end of the support structure 20 proximal to the vehicle and rotatable around the pivot post 60. A first indented or protruding surface 42 of the mirror assembly 1 is disposed at one end of the sleeve 41 around the pivot post 60. A second indented or protruding surface 43 of the base 70 is disposed around the pivot post 60 adjacent to the first indented surface 42 of the sleeve 41. The indented surfaces 42 and 43 have appropriate, possibly ramped, contours for engaging each other.

An axial compression spring 44 is located around the pivot post 60. One end of the spring presses against the end of the sleeve 41 which is opposite to that at which the indented surface 42 is located. An element or retaining element 45 is fixed around the pivot post 60 at the other end of the spring 44. The spring 44 presses the first indented surface 42 of the mirror assembly 1 against the indented surface 43 of the base 70 with an adequate axial force "F". This force provides locking between the above-mentioned indented surfaces 42, 43 and stabilisation of the mirror assembly 1 relative to the base 70 in normal use conditions. When the mirror assembly 1 receives an impact with a torque strength T, where 0 < T < T_{balance}, it is not permanently deflected and does not have its integrity or torque strength endangered. The sloping parts of the surfaces may slide relative to each other permitting limited rotation of the sleeve 41, but upon removal of the torque, the spring 44 returns the sleeve 41 to its pre-impact position. When T_{balance} < T < Tₘₐₓᵢₘᵤₘ the mirror assembly is deflected and its integrity is preserved. The sloping parts of surfaces 42 and 43 slide over and past each other. The projections of first surface 42 come to rest on the flat upper portions of second surface 43 with the spring 44 compressed and the mirror assembly needs to be pushed back to its pre-impact position, possibly by hand.

The indented surfaces 42 and 43 can be in the form of projections and small channels of trapezoidal cross section, located radially at the end of the sleeve 41 and around the pivot post 60 or vice versa. Lateral oblique surfaces of these formations are arranged to abut against each other and have selected inclinations for sliding relative to one another when the assembly receives an impact with torque strength T where 0 < T < T_{balance} and to become disengaged as explained above when T > T_{balance}.

The stabilisation device in accordance with the present invention operates in the following manner. When the mirror is in its normal use conditions, the spring 44 pushes the indented surface 42 of the mirror assembly 1 against the indented surface 43 of the base 70 locking the indented surfaces 42 and 43 to one another. Therefore, the mirror assembly 1 remains stabilised in the use position even when exposed to wind buffeting brought about by the vehicle and/or impact with torque strength T where 0 < T < T_{balance}. When the mirror assembly receives an impact with a torque strength T where 0 < T < T_{balance} its indented surface 42 slides relative to the indented surface 43 of the base 70 and thereby compress the spring 44 without permanent deflection of the mirror assembly 1. An impact with a torque T where T < T_{balance} is not enough to compromise the integrity or permanent position of the mirror assembly 1.

When the mirror receives an impact with a torque T where T_{balance} < T < Tₘₐₓᵢₘᵤₘ, the indented surface 42 of the mirror assembly slides relative to the indented surface 43 of the base 70 sufficiently to slide over and past it. As a result, there is a helical movement of the above mentioned indented surface 42 relative to the spring 44 and indented surface 43, until it is separated from the indented surface 43 of the base 70. In this situation, the sleeve 41 of the mirror assembly can turn around the pivot post 60 and the mirror assembly 1 is deflected relative to the base 70 without endangering the integrity of the mirror assembly. Tₘₐₓᵢₘᵤₘ is a reference torque above which permanent damage to the mirror assembly occurs.

In order to return the mirror assembly to its use position again, it is enough to manually relocate the mirror assembly 1 to its use position so that the indented surface 42 is angularly displaced relative to the indented surface 43 of the base 70. At the end of the relocation process, the surfaces 42 and 43 are coupled or urged against each other due to the force of the spring 44 and this automatically holds the mirror assembly with the axial force F. Relocation of the mirror assembly does not require any internal component of the mirror assembly to be accessed unlike conventional rearview mirrors.

It is believed to be clear that the inventive stabilisation device provides stabilisation of the external rearview mirror position and does not require access to any internal elements of the mirror.

Additional modifications and changes are possible in the inventive stabilisation device of the present invention. The indented surface 42 of the mirror assembly can be disposed in the interior of the sleeve 41 while the indented surface 43 of the base 70 can be disposed under the same in a flange around the pivot post 60 or in a ring disposed around it and fixed to the base 70. The spring 44 and the retaining element 45 can be disposed next to the upper end of the sleeve 41 and in the upper free end of the pivot post 60. Opposite or inverted arrangements relative to that described above are also possible. The spring and/or the retaining element may be situated in or at the lower or upper end of the sleeve and the post. For example the first indented surface 42 may be situated at the upper end of the sleeve 41 together with the second indented surface 43 at the upper end of the post 60, the spring 44 and retaining element 45 being in this case situated at the lower end of the post 60.

The spring may be arranged to bear on a flange having the second indented surface which is slidable along the pivot post 60 but rotatably restrained relative thereto. the second indented surface which is slidable along the pivot post 60 but rotatably restrained relative thereto. The indented surfaces may be at upper or lower ends of the sleeve as may the spring and/or retaining element.

The external rearview mirror can have different ornamental configurations and can be provided for different vehicles, such as pick-up trucks, cars and vehicles with other regulating mechanisms for adjusting the position of the mirror plate.

It will be understood that each of the elements described above, or two or more elements together, may also find a useful application in other types of construction differing from the types described above and may constitute inventions independently of the other features.

While the invention has been illustrated and described with reference to a specific embodiment, the invention is not intended to be limited to the details shown, since various modifications and structural changes may be made without departing from the scope of the invention as defined in the claims.

The foregoing fully explains the general principles of the present invention so that others can, by applying current knowledge, readily adapt it for various applications without omitting features that, from the standpoint of prior art, fairly constitute essential characteristics of the generic or specific aspects of this invention.

## Claims

1. A rearview mirror including a base (70) for connection to a vehicle (80) and a mirror assembly mounted on the base (70), the mirror assembly including a support structure (20), a mirror plate (2) supported by the support structure (20), a housing (30) accommodating part of the mirror assembly, a pivot post (60) mounted on the base (70) and a stabilisation device (40) to which the support structure (20) is connected, the stabilisation device (40) including a sleeve (41) surrounding the pivot post (60) and rotatable thereabout to permit articulation of the mirror assembly relative to the base (70), a first contoured surface (42) rotatable with the sleeve (41), a second contoured surface (43) fixed relative to the base (70) which is engageable by the first contoured surface (42) and an axial compression spring (44) arranged around the post (60) and so as to exert an axial force on the sleeve (41) and thereby urge the first and second contoured surfaces (42, 43) against each other, the axial force being selected so as to restrain the support structure (20) against permanent rotation around the post (60) when the mirror assembly is subjected to a torque of magnitude T where T < T_{balance}, T_{balance} being a threshold torque.

2. The mirror assembly according to claim 1 wherein the axial force is selected to permit rotation of the support structure (20) around the post (60) and leave it so rotated when T > T_{balance} without damage to the mirror assembly occurring.

3. The mirror according to claim 1 or 2 further including a retaining member (45) secured to the post (60) against which the spring (44) presses.

4. The assembly according to any preceding claim wherein the first contoured surface (42) is located at a lower end of the sleeve (41), the second contoured surface (43) is fixed to the base (70) or the post (60) and the spring (44) is situated around an upper end of the post (60) and has a lower end pressing against an upper end of the sleeve (41).

5. The mirror according to claim 3 wherein the retaining member (45) is secured around the upper end of the post (60) and presses against an upper end of the spring (44).

6. The mirror according to any preceding claim wherein at least one of the contoured surfaces (42, 43,) is indented.

7. The mirror according to any preceding claim wherein the contoured surfaces (42, 43) include a projection and a channel, each having a substantially trapezoidal cross-section, longitudinal axes of the trapezoidal projection and channel being arranged radially with respect to the sleeve (41) and the post (60), the projection being fixed relative to one of the sleeve (41) and the post (60) and the channel being fixed relative to the other one.

8. The mirror according to claim 1 wherein lateral oblique faces of the contoured surfaces (42, 43) are arranged to rest against each other and their inclinations are selected to slide relative to and past each other only once T > T_{balance}.

9. The mirror according to claim 3 wherein the first contoured surface (42) is located at an upper end of the sleeve (41), the second contoured surface (43) is located at an upper end of the post (60) and the spring (44) is situated around a lower end of the post (60) and has an upper end pressing against a lower end of the sleeve (41), the retaining member (45) being secured to the lower end of the post so that the spring (44) presses against the retaining member (45).

10. The mirror according to claim 3 wherein the first contoured surface (42) is located at a lower end of the sleeve (41), the second contoured surface (43) forms part of a flange connected to a lower portion of the post (60), the retaining member (45) is secured to a lower end of the post (60) and the spring (44) is situated between and presses against the retaining member (45) and the flange thereby urging the first and second contoured surfaces (42, 43) against each other.

11. The mirror according to claim 3 wherein the first contoured surface (42) is located at an upper end of the sleeve (41), the second indented surface (43) forms part of a flange connected to an upper portion of the post (60), the retaining member (45) is secured to an upper end of the post (60) and the spring (44) is situated between and presses against the retaining member (45) and the flange thereby urging the first and second contoured surfaces (42, 43) against each other.
